# FASCICULE DE BREVET EUROPEEN

(11) **EP 2 119 582 B1**
(45) Date de publication et mention de la délivrance du brevet: **11.07.2012**
(21) Numéro de dépôt: 09159703.9
(22) Date de dépôt: 07.05.2009
(51) Int. Cl.: B60H 1/00

(54) **Appareil et installation de chauffage, ventilation, et/ou de climatisation d'un véhicule automobile**
Kraftfahrzeugklimaanlage
Heating, ventilating and/or air conditioning apparatus and installation for a vehicle

(30) Priorité: 14.05.2008 FR 0802612
(43) Date de publication de la demande: 18.11.2009
(73) Titulaire: Valeo Systèmes Thermiques, 78321 Le Mesnil Saint Denis Cedex (FR)
(72) Inventeur: Vincent, Philippe, 28230, EPERNON (FR)
(74) Mandataire: Léveillé, Christophe

(56) Documents cités:
- DE-A1- 3 807 062
- DE-A1- 10 112 969
- DE-A1- 19 800 103
- US-A- 5 481 885

## Description

La présente invention est du domaine des appareils de chauffage, ventilation, et/ou de climatisation, notamment d'un véhicule automobile. Elle a pour objet un appareil ainsi qu'une installation de chauffage, ventilation, et/ou de climatisation comprenant un tel appareil.

Dans le domaine automobile, il est courant d'équiper un véhicule d'un appareil de chauffage, ventilation, et/ou de climatisation pour réguler les paramètres aérothermiques de l'air distribué à l'intérieur de l'habitacle du véhicule. Un appareil de chauffage, ventilation, et/ou de climatisation comprend un boîtier logeant un groupe moto-ventilateur pour faire circuler à l'intérieur du boîtier au moins un flux d'air. Le groupe moto-ventilateur comprend un moteur électrique pour la mise en rotation d'au moins une turbine logée à l'intérieur d'une volute. La volute comporte une entrée d'air pour l'admission du flux d'air à l'intérieur de son volume intérieur et une sortie d'air pour la distribution du flux d'air dans l'appareil de chauffage, ventilation, et/ou de climatisation. Le boîtier comporte au moins une bouche d'entrée d'air et au moins une bouche de sortie d'air pour respectivement admettre le flux d'air à l'intérieur du boîtier et évacuer le flux d'air hors du boîtier vers l'habitacle. Plus particulièrement, le boîtier comporte une bouche d'entrée d'air extérieur pour prélever un flux d'air frais à l'extérieur de l'habitacle, et une bouche d'entrée d'air de recirculation pour prélever un flux d'air de recirculation à l'intérieur de l'habitacle.

Le boîtier loge également des moyens de traitement thermique du flux d'air préalablement à sa distribution à l'intérieur de l'habitacle par l'intermédiaire de la bouche de sortie d'air. De tels moyens de traitement thermique comprennent notamment un radiateur et un évaporateur pour respectivement réchauffer et refroidir le flux d'air.

De façon alternative, le boîtier loge éventuellement un filtre à particules pour retenir des impuretés transportées par le flux d'air préalablement à la délivrance de celui-ci à l'intérieur de l'habitacle.

Se pose un problème général relatif à l'agencement entre eux des différents éléments que comprend l'installation et propre à la circulation du flux d'air à l'intérieur du boîtier.

Le document FR2638686 décrit une installation de chauffage, ventilation, et/ou de climatisation comprenant un appareil de chauffage, ventilation, et/ou de climatisation et un tablier de séparation entre un compartiment moteur et un compartiment habitacle d'un véhicule. Le boîtier de l'appareil est constitué d'une pluralité de coques. Une première coque est destinée à être installée à l'intérieur du compartiment moteur du véhicule tandis qu'une deuxième coque est destinée à être installée à l'intérieur du compartiment habitacle. Le compartiment moteur est le compartiment du véhicule qui reçoit le moteur du véhicule et le compartiment habitacle est le compartiment où prend place l'utilisateur du véhicule.

Plus particulièrement, les première et deuxième coques sont rapportées sur deux faces opposées du tablier de séparation. Des ouvertures sont ménagées à travers le tablier pour permettre une communication aéraulique entre un premier volume interne que délimite la première coque et un deuxième volume interne que délimite la deuxième coque.

Se pose un problème particulier relatif à l'agencement des éléments constitutifs de l'appareil de chauffage, ventilation, et/ou de climatisation.

Selon le document FR2638686, la première coque loge le groupe moto-ventilateur et un conduit d'évacuation d'air s'étendant entre la sortie d'air de la volute et une première ouverture ménagée à travers le tablier. Le conduit d'évacuation d'air loge un premier filtre à particules. La première coque est équipée de la bouche d'entrée d'air extérieur pour permettre une admission d'air à l'intérieur du premier volume interne depuis l'extérieur de l'habitacle.

La deuxième coque loge le radiateur, l'évaporateur et un deuxième filtre à particules. Plus particulièrement, la deuxième coque comporte une cloison de séparation entre une chambre de traitement thermique, logeant le radiateur et l'évaporateur, et une chambre d'admission d'air de recirculation, logeant le deuxième filtre à particules. La deuxième coque est équipée de la bouche d'entrée d'air de recirculation pour permettre une admission d'air à l'intérieur de la chambre d'admission d'air de recirculation depuis l'habitacle. Une deuxième ouverture ménagée à travers le tablier permet une communication aéraulique entre la chambre d'admission d'air de recirculation et le premier volume interne.

L'architecture d'une telle installation et d'un tel appareil s'avère complexe, mettant en oeuvre de nombreux éléments et induisant de nombreux espaces dont l'étanchéité entre eux doit être contrôlée, et dont l'agencement entre eux mérite d'être amélioré et simplifié, pour notamment faciliter des opérations de maintenance. De plus, une telle installation et un tel appareil s'avèrent encombrants notamment selon une direction longitudinale avant-arrière du véhicule.

De plus, une telle architecture induit une circulation des flux d'air extérieur et de recirculation particulière méritant d'être améliorée, simplifiée et rationalisée, notamment au regard de pertes de charge que sont susceptibles de subir les flux d'air extérieur et de recirculation ainsi qu'au regard de performances globales d'une telle installation.

En effet, le flux d'air extérieur pénètre à travers la bouche d'entrée d'air extérieur depuis le compartiment moteur à l'intérieur du premier volume interne. Puis, le flux d'air extérieur pénètre à l'intérieur de la volute à travers l'entrée d'air pour être évacué à l'intérieur du conduit d'évacuation d'air à travers la sortie d'air. Le flux d'air extérieur traverse le premier filtre à particules, puis la première ouverture pour être éventuellement traité par les moyens de traitement thermique logés à l'intérieur de la chambre de traitement thermique. Le flux d'air extérieur est ensuite distribué à l'intérieur de l'habitacle à travers au moins une des bouches de sortie d'air.

Le flux d'air de recirculation pénètre à travers la bouche d'entrée d'air de recirculation depuis le compartiment habitacle à l'intérieur de la chambre d'admission, puis traverse le deuxième filtre à particules et franchit la deuxième ouverture pour pénétrer à l'intérieur du premier volume interne. Le flux d'air de recirculation suit ensuite un chemin indique à celui décrit ci-dessus pour le flux d'air extérieur.

Les flux d'air extérieur et de recirculation sont susceptibles d'être mixés l'un avec l'autre à l'intérieur du premier volume interne préalablement à leur admission conjointe à l'intérieur de la volute.

Un autre appareil de chauffage, ventilation et climatisation est connu du document US 5 481 885, qui est considéré comme l'art antérieur le plus proche.

Le but de la présente invention est de proposer un appareil de chauffage, ventilation, et/ou de climatisation présentant une architecture simple et permettant des opérations de maintenance aisées, avec une circulation de flux d'air à l'intérieur de l'appareil optimisée, notamment au regard de pertes de charge subies par tels flux d'air.

Un autre but de la présente invention est de proposer une installation de chauffage, ventilation, et/ou de climatisation comprenant un tel appareil et un tablier de séparation d'un compartiment moteur et d'un compartiment habitacle du véhicule, l'agencement étant optimisé pour notamment faciliter une circulation des flux d'air à l'intérieur de l'installation.

Ce but est atteint par l'appareil de chauffage, ventilation et/ou climatisation de la revendication 1, et par l'installation de chauffage, ventilation et/ou climatisation de la revendication 12.

L'appareil selon la présente invention est un appareil de chauffage, ventilation, et/ou de climatisation d'un véhicule automobile comprenant un groupe moto-ventilateur destiné à être installé à l'intérieur d'un compartiment moteur du véhicule. L'appareil comprend un boîtier d'admission d'air destiné à être installé à l'intérieur d'un compartiment habitacle du véhicule et pourvu d'au moins une bouche d'entrée d'un flux d'air de recirculation. Selon la présente invention, le boîtier d'admission d'air est pourvu d'au moins une bouche d'entrée d'un flux d'air extérieur venant du compartiment moteur.

Selon la présente invention, le boîtier d'admission d'air, installé à l'intérieur du compartiment habitacle, comporte la bouche d'entrée du flux d'air extérieur. Ainsi, à l'intérieur de l'appareil, la circulation d'un flux d'air, indifféremment extérieur et/ou de recirculation, débute à l'intérieur du même boîtier d'admission d'air disposé à l'intérieur du compartiment habitacle. Ces dispositions sont telles que le boîtier d'admission d'air constitue une chambre de mixage des flux d'air extérieur et de recirculation.

De préférence, un canal d'admission d'air s'étend entre une entrée d'air d'une volute constitutive du groupe moto-ventilateur et une fenêtre d'évacuation d'un flux d'air que comporte le boîtier d'admission d'air.

Ces dispositions sont telles que l'écoulement du flux d'air, indifféremment extérieur et/ou de recirculation, est guidé par le canal d'admission d'air entre la fenêtre d'évacuation du boîtier d'admission d'air et l'entrée d'air de la volute, pour notamment minimiser des pertes de charges susceptibles d'affecter le flux d'air. Il en résulte une admission directe du flux d'air, constitué de l'un quelconque au moins du flux d'air extérieur et/ou de recirculation, à l'intérieur de la volute depuis le boîtier d'admission d'air.

De façon complémentaire ou alternativement, un canal d'évacuation d'air s'étend avantageusement entre une sortie d'air de la volute et une sortie d'air du canal d'évacuation d'air disposée en vis-à-vis d'une fenêtre d'admission que comporte un boîtier de distribution d'air qui est destiné à être installé à l'intérieur du compartiment habitacle.

Préférentiellement, l'appareil de chauffage, ventilation, et/ou de climatisation loge au moins un moyen de traitement thermique du flux d'air circulant à travers de l'appareil de chauffage, ventilation, et/ou de climatisation. Selon un premier mode de réalisation, le moyen de traitement thermique est logé à l'intérieur du boîtier de distribution d'air. Selon un second mode de réalisation complémentaire ou alternatif, le moyen de traitement thermique est logé à l'intérieur du canal d'évacuation d'air.

Selon une variante de réalisation, le boîtier d'admission d'air et le boîtier de distribution d'air forment un premier ensemble monobloc.

Selon une autre variante de réalisation, la volute et le canal d'évacuation d'air forment un deuxième ensemble monobloc.

L'appareil de chauffage, ventilation, et/ou de climatisation loge préférentiellement des moyens de traitement thermique du flux d'air circulant à travers l'appareil et/ou un filtre à particules disposé à l'intérieur du boîtier d'admission d'air, pour retenir des impuretés transportées par le flux d'air, le filtre étant, notamment, disposé à l'intérieur de l'appareil en amont des moyens de traitement thermique du flux d'air selon le sens d'écoulement du flux d'air.

Selon une forme particulière de réalisation, les moyens de traitement thermique sont logés à l'intérieur du boîtier de distribution d'air. Selon une autre forme particulière de réalisation, les moyens de traitement thermique sont logés à l'intérieur du canal d'évacuation d'air.

Les moyens de traitement thermique comprennent préférentiellement au moins un radiateur et au moins un évaporateur. Selon un autre mode de réalisation, l'évaporateur est logé à l'intérieur du canal d'évacuation d'air tandis que le radiateur est logé à l'intérieur du boîtier de distribution d'air.

Ces dispositions sont telles que l'appareil est équipé d'un unique filtre à particules apte à retenir les impuretés de l'un quelconque au moins d'un flux d'air extérieur ou de recirculation.

La bouche d'entrée d'air de recirculation et la bouche d'entrée d'air extérieur sont avantageusement chacune équipée d'un volet d'admission d'air respectif qui est manoeuvrable entre une position d'ouverture dans laquelle le volet autorise une admission d'air à l'intérieur du boîtier d'admission d'air et une position de fermeture dans laquelle le volet interdit une telle admission.

Une installation selon la présente invention est une installation de chauffage, ventilation, et/ou de climatisation d'un véhicule automobile comprenant un appareil de chauffage, ventilation, et/ou de climatisation tel que défini précédemment et un tablier de séparation de compartiments moteur et habitacle du véhicule.

Selon la présente invention, le groupe moto-ventilateur est disposé à l'intérieur du compartiment moteur, et le boîtier d'admission d'air, équipé de la bouche d'entrée du flux d'air extérieur et de la bouche d'entrée du flux d'air de recirculation, est disposé à l'intérieur du compartiment habitacle.

Le tablier comporte avantageusement au moins une première ouverture pour le passage d'un flux d'air extérieur depuis le compartiment moteur vers le boîtier d'admission d'air.

Le tablier comporte également, préférentiellement, au moins une deuxième ouverture pour le passage d'un flux d'air depuis le boîtier d'admission d'air vers un canal d'admission d'air d'une volute constitutive du groupe-moto-ventilateur.

Enfin, selon un mode particulier de réalisation, le tablier comprend également, au moins une troisième ouverture pour le passage du flux d'air depuis un canal d'évacuation, disposé à l'intérieur du compartiment moteur, vers un boîtier de distribution d'air, disposé à l'intérieur du compartiment habitacle.

De préférence, le tablier s'étend globalement selon un plan comprenant une direction transversale et une direction verticale du véhicule. Avantageusement, les première et deuxième ouvertures s'étendent, par exemple, selon des directions générales respectives sensiblement parallèles l'une à l'autre et sensiblement parallèles à la direction transversale. La première ouverture est disposée au-dessus de la deuxième ouverture selon la direction verticale

De plus, les premières ouvertures sont par exemple encore en pluralité et s'étendent selon des directions générales respectives sensiblement parallèles les unes aux autres et sensiblement parallèles à la direction verticale, les premières ouvertures bordant latéralement la deuxième ouverture.

Enfin, selon une autre variante de la présente invention, les deuxièmes ouvertures sont notamment en pluralité.

La présente invention sera mieux comprise, et des détails en relevant apparaîtront, à la lecture de la description qui va être faite de variantes de réalisation, données à titre d'exemple non limitatif, en relation avec les figures des planches annexées, dans lesquelles :
- la figure 1 est une vue schématique en coupe longitudinale d'une installation et d'un appareil de chauffage, ventilation, et/ou de climatisation selon la présente invention;
- la figure 2 est une vue schématique en coupe transversale de l'installation et de l'appareil de chauffage, ventilation, et/ou de climatisation illustrés sur la figure 1;
- les figures 3 à 9 sont des illustrations respectives de variantes de réalisation de l'installation et de l'appareil de chauffage, ventilation, et/ou de climatisation illustrés sur les figures 1 et 2;
- la figure 10a est une illustration d'une première forme de réalisation de l'installation et de l'appareil de chauffage, ventilation, et/ou de climatisation illustrés sur les figures 1 à 9, la figure 10b étant une vue de face d'un tablier selon cette première forme de réalisation de l'invention; et,
- la figure 11a est une illustration d'une deuxième forme de réalisation de l'installation et de l'appareil illustrés sur les figures 1 à 9, la figure 11b étant une vue de face d'un tablier constitutif selon cette deuxième forme de réalisation de l'invention.

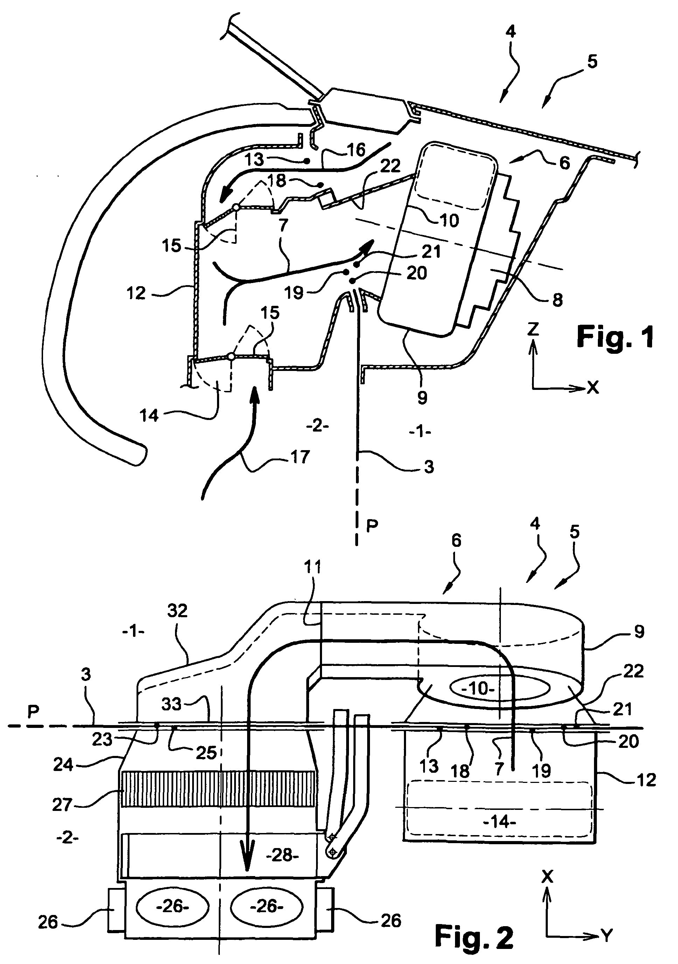

Les figures 1 et 2 présentent respectivement une vue schématique en coupe longitudinale d'une installation et d'un appareil de chauffage, ventilation, et/ou de climatisation dans un véhicule automobile comprenant un compartiment moteur 1 à l'intérieur duquel est disposé le moteur du véhicule et un compartiment habitacle 2 à l'intérieur duquel prend place un conducteur et/ou un ou plusieurs passagers du véhicule. Les compartiments moteur 1 et habitacle 2 sont isolés l'un de l'autre par l'intermédiaire d'un tablier de séparation 3. Le tablier de séparation 3 s'étend selon un plan d'extension générale P disposée sensiblement perpendiculairement à une direction longitudinale du véhicule, notée X sur les figures 1 et 2. La direction longitudinale du véhicule X s'étend entre un bord avant et un bord arrière du véhicule. Le plan P contient une direction transversale du véhicule, notée Y sur la figure 2, s'étendant entre un côté latéral droit et un côté latéral gauche du véhicule et une direction verticale du véhicule, notée Z sur la figure 1, généralement orthogonale au plancher du véhicule, la direction verticale Z étant orthogonale aux directions X et Y. Les directions X, Y et Z forment un trièdre direct.

Le véhicule est équipé d'un appareil de chauffage, ventilation, et/ou de climatisation 4 pour réguler les paramètres aérothermiques de l'air distribué à l'intérieur du compartiment habitacle 2. L'appareil de chauffage, ventilation, et/ou de climatisation 4 et le tablier de séparation 3 définissent une installation de chauffage, ventilation, et/ou de climatisation 5 du véhicule.

L'appareil de chauffage, ventilation, et/ou de climatisation 4 comprend un groupe moto-ventilateur 6 pour faire circuler au moins un flux d'air 7 à l'intérieur de l'appareil de chauffage, ventilation, et/ou de climatisation 4. Le groupe moto-ventilateur 6 comprend un moteur électrique 8 pour mettre en rotation au moins une turbine, non représentée sur les figures, logée à l'intérieur d'une volute 9. La volute 9 comporte une entrée d'air 10 pour admettre le flux d'air 7 dans son volume intérieur et une sortie d'air 11 pour distribuer le flux d'air 7 dans l'appareil de chauffage, ventilation, et/ou de climatisation 4. Selon la présente invention, le groupe moto-ventilateur 6 est préférentiellement disposé à l'intérieur du compartiment moteur 1.

Selon la présente invention, l'appareil de chauffage, ventilation, et/ou de climatisation 4 comprend un unique boîtier d'admission d'air 12 muni d'une bouche d'entrée d'air extérieur ou frais 13 en communication aéraulique avec l'extérieur du véhicule et d'une bouche d'entrée d'air de recirculation 14 en communication aéraulique avec le compartiment habitacle 2, le boîtier d'admission d'air 12 étant préférentiellement disposé à l'intérieur du compartiment habitacle 2.

Il en résulte que l'admission d'air à l'intérieur de l'appareil de chauffage, ventilation, et/ou de climatisation 4, indifféremment de l'air extérieur et/ou de recirculation, est effectuée à partir du boîtier d'admission d'air 12, qui est unique et disposé à l'intérieur du compartiment habitacle 2. La bouche d'entrée d'air de recirculation 14 et la bouche d'entrée d'air extérieur 13 sont équipée respectivement d'un volet d'admission d'air 15 manoeuvrable entre une position d'ouverture (en traits pointillés sur les figures 1, 4, 10a et 11a) dans laquelle le volet d'admission d'air 15 autorise une entrée d'air à l'intérieur du boîtier d'admission d'air 12 et une position de fermeture (en traits pleins sur les figures 1, 4, 10a et 11a) dans laquelle le volet d'admission d'air 15 interdit une telle admission. Ces dispositions sont telles que le boîtier d'admission d'air 12 constitue en outre un boîtier de mélange d'un flux d'air extérieur 16 admis par l'intermédiaire de la bouche d'entrée d'air extérieur 13 et d'un flux d'air de recirculation 17 admis par l'intermédiaire de la bouche d'entrée d'air de recirculation 14. La disposition des volets d'admission d'air 15 autorise ainsi une admission d'air extérieur 13 et/ou de recirculation 17 dans le boîtier d'admission d'air 12.

Pour permettre une admission du flux d'air extérieur 13 à l'intérieur du boîtier d'admission d'air 12, une première ouverture 18 est ménagée à travers le tablier 3, la première ouverture 18 étant disposée en regard de la bouche d'entrée d'air extérieur 13.

Une fenêtre d'évacuation 19 du flux d'air 7 est ménagée à travers le boîtier d'admission d'air 12. La fenêtre d'évacuation 19 est disposée en vis-à-vis d'une deuxième ouverture 20 ménagée à travers le tablier 3 et en vis-à-vis d'un débouché 21 d'un canal d'admission d'air 22 à l'intérieur de la volute 9. La mise en communication aéraulique directe entre la fenêtre d'évacuation 19, la deuxième ouverture 20 et le débouché 21 permet une circulation rapide et efficace du flux d'air 7 depuis le boîtier d'admission d'air 12 vers la volute 9, en minimisant au mieux les pertes de charge susceptibles d'être subies par le flux d'air 7. Plus particulièrement, la superposition de la fenêtre d'évacuation 19, de la deuxième ouverture 20 et du débouché 21 permet une telle circulation rapide et efficace. Ces dispositions sont telles que le flux d'air 7, indifféremment extérieur et/ou de recirculation, est directement admis à l'intérieur de la volute 9.

La figure 2 est une vue schématique de dessus en coupe transversale de l'installation et de l'appareil illustrés sur la figure 1. La volute 9 comprend une sortie d'air 11 en communication aéraulique avec un canal d'évacuation d'air 32. Ce canal d'évacuation d'air 32 s'étend entre la sortie d'air 11 de la volute 9 et une sortie d'air 33 du canal d'évacuation d'air 32. La sortie d'air 33 est en vis-à-vis d'une troisième ouverture 23 ménagée à travers le tablier 3. Un boîtier de distribution d'air 24, installé à l'intérieur du compartiment habitacle 2, comporte une fenêtre d'admission 25 du flux d'air 7 superposée à la troisième ouverture 23. Le boîtier de distribution d'air 24 est équipé d'une pluralité de bouches de sortie d'air 26 pour évacuer le flux d'air 7 hors du boîtier de distribution d'air 24 vers des zones respectives du compartiment habitacle 2, en particulier, de sorties dite 'dégivrage' disposées à proximité de la partie inférieure du pare-brise, des sorties dites 'aération' agencées en partie centrale et latérale d'une planche de bord du véhicule et des sorties dites 'pieds' aménagées en partie inférieure de la planche de bord.

L'appareil de chauffage, ventilation, et/ou de climatisation 4 comprend des moyens de traitement thermique du flux d'air 7 comprenant un évaporateur 27 et un radiateur 28, ou analogues, pour respectivement refroidir et réchauffer le flux d'air 7 préalablement à sa distribution à l'intérieur du compartiment habitacle 2 à travers les bouches de sortie d'air 26.

Selon la présente invention, le mixage du flux d'air 7 à température désirée est réalisé de façon classique. Le flux d'air 7 traverse en totalité l'évaporateur afin d'être refroidi et déshumidifié. Par suite, une portion du flux d'air 7 traverse le radiateur 28 alors qu'une portion résiduelle du flux d'air 7 contourne le radiateur 28.

Les deux parties du flux d'air 7 entrent dans une chambre de mixage (non représentée) en proportion variable afin d'établir le flux d'air à distribuer dans l'habitacle 2 à la température requise.

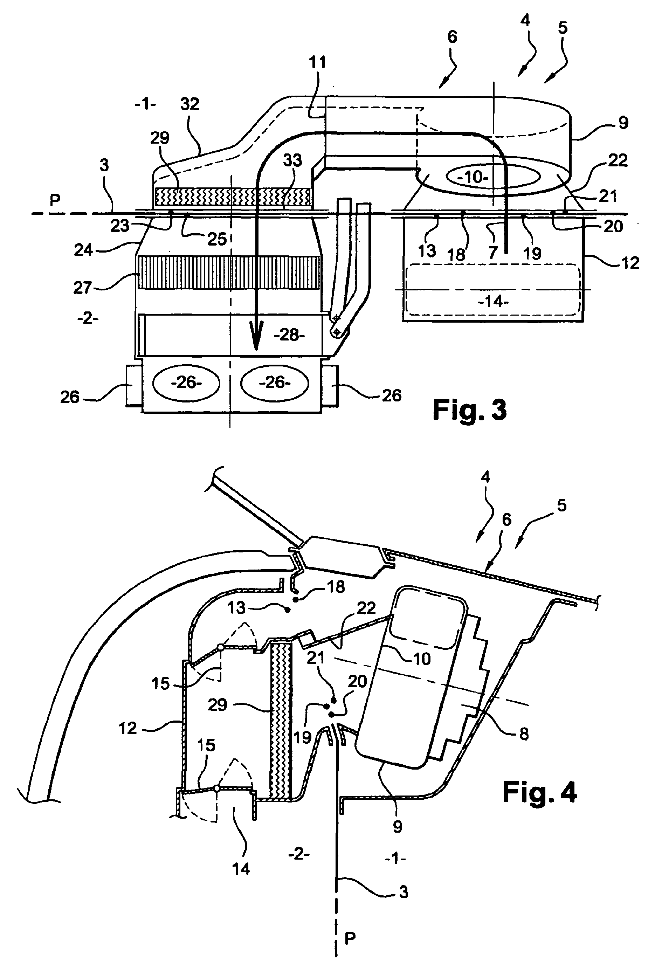

Les exemples de réalisations qui vont être décrits en relation avec les figures 3 à 11 b comportent des éléments identiques à l'installation et à l'appareil de chauffage, ventilation, et/ou de climatisation qui viennent d'être exposés relativement aux figures 1 et 2. En conséquence, dans la description qui va suivre, ces éléments porteront la même référence et auront des caractéristiques similaires sauf précision contraire.

Selon les variantes illustrées sur les figures 3 à 5, l'appareil de chauffage, ventilation, et/ou de climatisation 4 loge en outre un filtre à particules 29 pour retenir des impuretés véhiculées par le flux d'air 7. Le filtre à particules 29 est disposé à l'intérieur de l'appareil de chauffage, ventilation, et/ou de climatisation 4 en amont des moyens de traitement thermique 27 et 28 du flux d'air 7, selon le sens d'écoulement du flux d'air 7.

Selon la variante illustrée sur la figure 3, le filtre à particules 29 est logé à l'intérieur du canal d'évacuation d'air 32, les moyens de traitement thermique 27 et 28 étant disposés à l'intérieur du boîtier de distribution d'air 24.

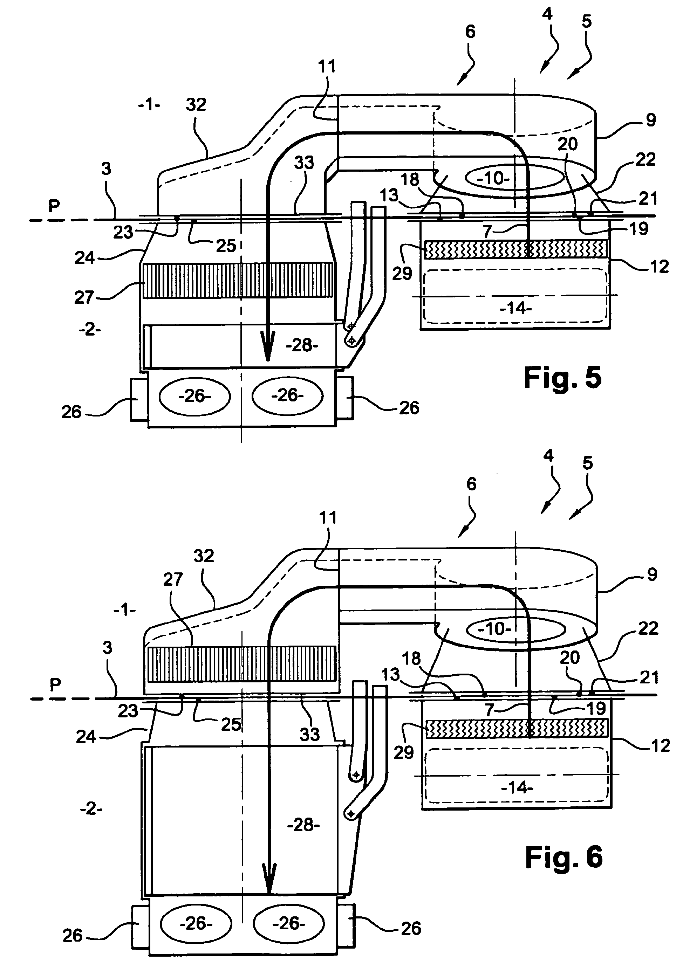

Selon la variante illustrée sur les figures 4 et 5, le filtre à particules 29 est logé à l'intérieur du boîtier d'admission d'air 12, les moyens de traitement thermique 27 et 28 étant également disposés à l'intérieur du boîtier de distribution d'air 24.

Le filtre à particules 29 constitue un moyen de filtration du flux d'air 7. Il peut être également réalisé par tous moyens permettant d'assurer la même fonction de filtration, notamment des dispositifs photo-catalytiques, des dispositifs à plasma-catalyses, des dispositifs ioniseurs, des dispositifs électrostatiques, ... De façon identique, les moyens de filtrations peuvent également combinés avec des moyens de filtrations des odeurs, en particulier, par un filtre à charbon actif.

Selon la variante illustrée sur la figure 6, l'évaporateur 27 est disposé à l'intérieur du canal d'évacuation d'air 32, le radiateur 28 est logé à l'intérieur du boîtier de distribution d'air 24. De façon non limitative, selon le mode de réalisation de la figure 6, le filtre à particules 29 est placé à l'intérieur du boîtier d'admission d'air 12.

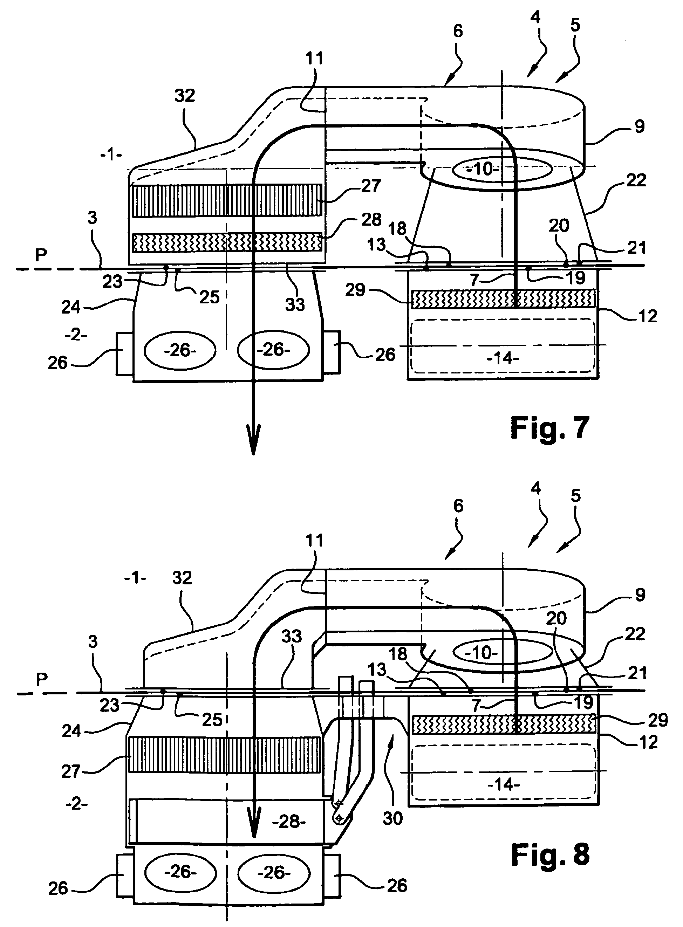

Selon la variante illustrée sur la figure 7, l'évaporateur 27 et le radiateur 28 sont logés à l'intérieur du canal d'évacuation d'air 32. De façon non limitative, selon le mode de réalisation de la figure 7, le filtre à particules 29 est placé à l'intérieur du boîtier d'admission d'air 12.

Selon la variante illustrée sur la figure 8, le boîtier d'admission d'air 12 et le boîtier de distribution d'air 24 forment un premier ensemble monobloc 30. La paroi du premier ensemble monobloc 30 présente une continuité entre le boîtier d'admission d'air 12 et le boîtier de distribution d'air 24. Selon cette variante, le premier ensemble monobloc 30 est aisément réalisable lors d'une unique et conjointe opération de moulage des boîtiers d'admission d'air 12 et de distribution d'air 24.

Il en résulte qu'il est aisé d'assembler le premier ensemble monobloc 30 et le tablier 3 en une seule opération de montage. De plus, le premier ensemble monobloc 30 regroupe l'ensemble des fonctions d'admission d'air à l'intérieur de l'appareil de chauffage, ventilation, et/ou de climatisation 4 et de distribution d'air hors de l'appareil de chauffage, ventilation, et/ou de climatisation 4, ce qui est particulièrement avantageux.

Enfin, la mise en place du premier ensemble monobloc 30 à l'intérieur du compartiment habitacle 2 rapproche un organe de commande permettant à l'utilisateur de définir les paramètres aérothermiques désirés de l'ensemble des volets, en particulier les volets d'admission d'air 15 et les volets commandant l'ouverture et la fermeture des bouches de sortie d'air 26 disposés dans l'appareil de chauffage, ventilation, et/ou de climatisation 4. Un tel agencement facilite la commande de manoeuvre de ces volets.

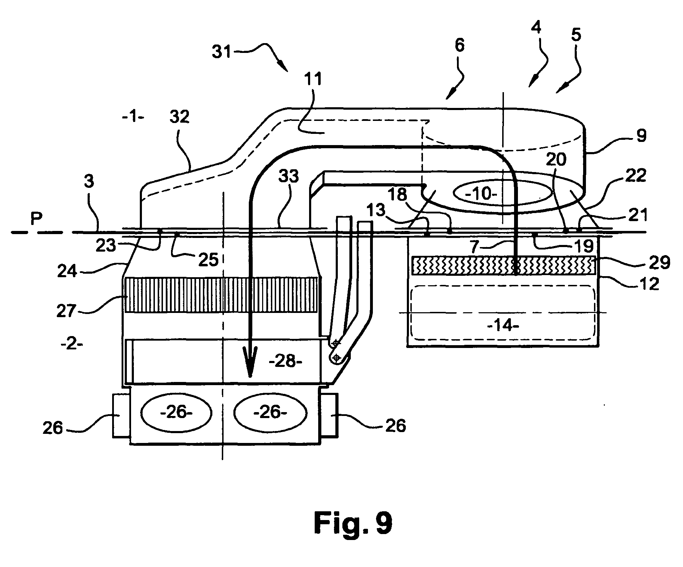

Selon la variante illustrée sur la figure 9, la volute 9 et le canal d'évacuation d'air 32 forment un deuxième ensemble monobloc 31 présentant sensiblement les mêmes avantages de réalisation et d'assemblage que le premier ensemble monobloc 30 décrit précédemment.

Ainsi, dans un mode de réalisation particulièrement avantageux, le premier ensemble monobloc 30 est agencé sur la tablier 3 du coté du compartiment habitacle 2 et le deuxième ensemble monobloc 31 est disposé sur la tablier 3 du coté du compartiment moteur 1.

Selon cette disposition particulière, le tablier 3 sert d'interface de connexion entre les ensembles monoblocs 31 et 32 afin de réaliser, après montage, l'appareil de chauffage, ventilation, et/ou de climatisation 4 qui, en association avec le tablier 3, constitue l'installation de chauffage, ventilation, et/ou de climatisation 5.

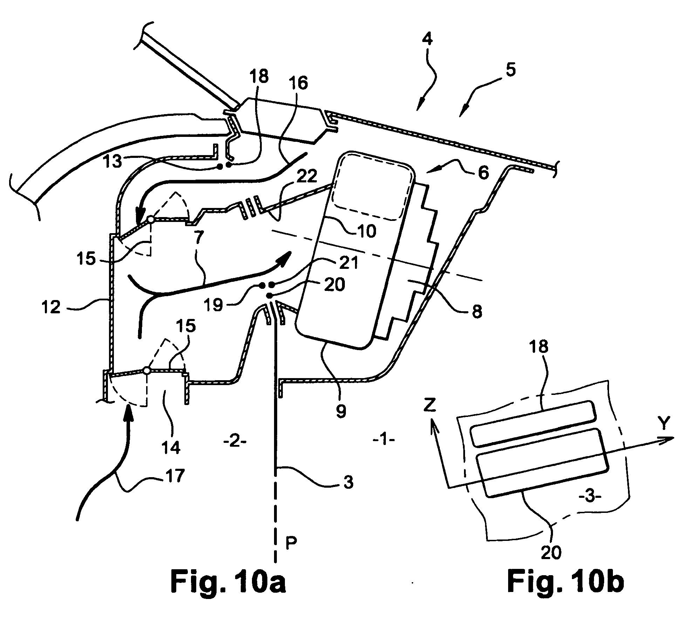

Selon la variante illustrée sur les figures 10a et 10b, les première ouverture 18 et deuxième ouverture 20 s'étendent selon des directions générales respectives qui sont sensiblement parallèles l'une à l'autre et qui sont sensiblement parallèles à la direction transversale Y. Plus particulièrement, la première ouverture 18 est disposée au-dessus de la deuxième ouverture 20 selon la direction verticale Z.

Selon une variante de réalisation non représentée, un unique passage est réalisé dans le tablier 3 afin d'assurer les fonctions dévolues aux ouvertures 18 et 20. Dans cette configuration, des parois internes du boîtier d'admission d'air 12 permettent de séparer flux d'air extérieur 16 et flux d'air 7 entrant dans le groupe moto-ventilateur 6.

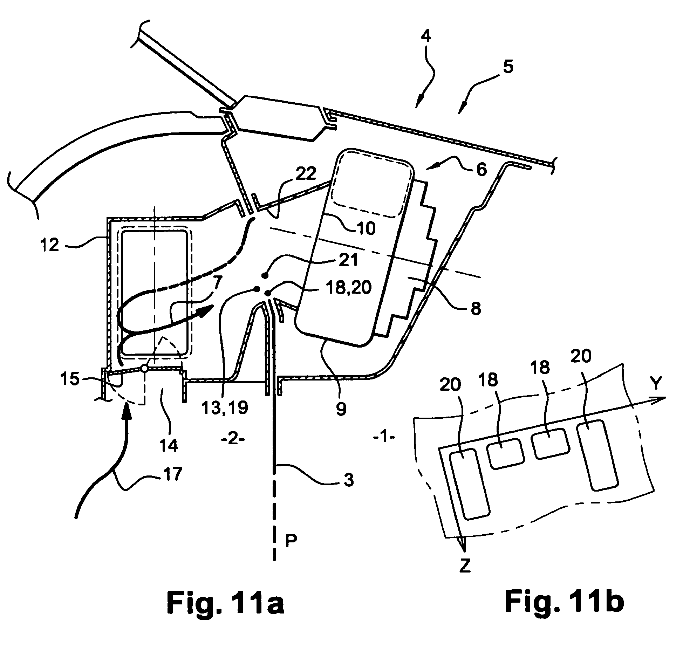

Selon la variante illustrée sur les figures 11a et 11b, le tablier 3 comporte une pluralité de premières ouvertures 18 s'étendant selon des directions générales respectives sensiblement alignées les unes par rapport aux autres et qui sont disposées sensiblement parallèles à la direction transversale Y.

Selon cet exemple de réalisation, le tablier 3 comporte également une pluralité des deuxièmes ouvertures 20 s'étendant selon des directions générales respectives qui sont sensiblement alignées les unes par rapport aux autres et qui sont disposées sensiblement parallèles à la direction verticale Z. Plus particulièrement, les premières ouvertures 18 bordent latéralement les deuxièmes ouvertures 20.

De façon alternative, le tablier 3 comporte un unique passage à travers laquelle passe le flux d'air 7 et flux d'air extérieur 16. Les fonctions respectives des première ouverture 18, deuxième ouverture 20 et troisième ouverture 23 sont opérées par des parois disposés dans le boîtier d'admission d'air 12 et/ou le boîtier de distribution d'air 24 et/ou premier ensemble monobloc 30.

Ces dispositions sont telles que le flux d'air 7, indifféremment issu du flux d'air extérieur 16 et/ou du flux d'air de recirculation 17, suit depuis le boîtier d'admission d'air 12 jusqu'au boîtier de distribution d'air 24, un trajet conformé sensiblement en U, ce qui induit une circulation rapide et efficace du flux d'air 7 à l'intérieur de l'appareil de chauffage, ventilation, et/ou de climatisation 4 et de l'installation de chauffage, ventilation, et/ou de climatisation 5.

Ainsi, l'appareil de chauffage, ventilation, et/ou de climatisation 4 et l'installation de chauffage, ventilation, et/ou de climatisation 5 selon la présente invention sont moins encombrant selon les directions X, Y et Z, et plus particulièrement selon la direction X, notamment pour offrir un compartiment habitacle 2 à l'utilisateur qui soit le plus spacieux possible.

De plus, l'assemblage entre eux des éléments qui constituent l'appareil de chauffage, ventilation, et/ou de climatisation 4 et l'installation de chauffage, ventilation, et/ou de climatisation 5 selon la présente invention est plus simple et plus rapide, cet assemblage devant permettre des opérations de maintenance également simples et rapides.

Enfin, la circulation du flux d'air 7 à l'intérieur de l'appareil de chauffage, ventilation, et/ou de climatisation 4 et de l'installation de chauffage, ventilation, et/ou de climatisation 5 est plus simple et moins affectée par des pertes de charges, cette circulation permettant d'offrir à l'utilisateur un confort thermique optimisé à l'utilisateur présent à l'intérieur du compartiment habitacle 2.

Bien évidemment, l'invention n'est pas limitée aux modes de réalisation détaillés ci-dessus et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Appareil de chauffage, ventilation, et/ou de climatisation (4) d'un véhicule automobile, comprenant un groupe moto-ventilateur (6) destiné à être installé à l'intérieur d'un compartiment moteur (1) du véhicule, et un boîtier d'admission d'air (12) destiné à être installé à l'intérieur d'un compartiment habitacle (2) du véhicule et pourvu d'au moins une bouche d'entrée d'un flux d'air de extérieur (13),
**caractérisé en ce que** le boîtier d'admission d'air (12) est pourvu d'au moins une bouche d'entrée d'un flux d'air de recirculation (14), et **en ce que** le dit d'un flux d'air extérieur (13) vient du compartiment moteur (1).

2. Appareil selon la revendication 1, **caractérisé en ce que** l'appareil de chauffage, ventilation, et/ou de climatisation (4) comprend un canal d'admission d'air (22) s'étendant entre une entrée d'air (10) d'une volute (9) constitutive du groupe moto-ventilateur (6) et une fenêtre d'évacuation (19) d'un flux d'air (7) disposée dans le boîtier d'admission d'air (12).

3. Appareil selon la revendication 1 ou 2, **caractérisé en ce que** l'appareil de chauffage, ventilation, et/ou de climatisation (4) comprend un canal d'évacuation d'air (32) s'étendant entre une sortie d'air (11) de la volute (9) et une sortie d'air (33) du canal d'évacuation d'air (32) disposée en vis-à-vis d'une fenêtre d'admission (25) d'un boîtier de distribution d'air (24) destiné à être installé à l'intérieur du compartiment habitacle (2).

4. Appareil selon la revendication 3, **caractérisée en ce que** l'appareil de chauffage, ventilation, et/ou de climatisation (4) loge au moins un moyen de traitement thermique (27, 28) du flux d'air (7) circulant à travers de l'appareil de chauffage, ventilation, et/ou de climatisation (4).

5. Appareil selon la revendication 4, **caractérisée en ce que** le moyen de traitement thermique (27, 28) est logé à l'intérieur du boîtier de distribution d'air (24).

6. Appareil selon la revendication 4 ou 5, **caractérisée en ce que** le moyen de traitement thermique (27, 28) est logé à l'intérieur du canal d'évacuation d'air (32).

7. Appareil selon l'une quelconque des revendications 3 à 6, **caractérisé en ce que** le boîtier d'admission d'air (12) et le boîtier de distribution d'air (24) forment un premier ensemble monobloc (30).

8. Appareil selon l'une quelconque des revendications 3 à 7, **caractérisé en ce que** la volute (9) et le canal d'évacuation d'air (32) forment un deuxième ensemble monobloc (31).

9. Appareil selon l'une quelconque des revendications 6 à 8, **caractérisé en ce que** l'appareil de chauffage, ventilation, et/ou de climatisation (4) loge un filtre à particules (29) disposé à l'intérieur du canal d'évacuation d'air (32).

10. Appareil selon l'une quelconque des revendications 6 à 8, **caractérisé en ce que** l'appareil de chauffage, ventilation, et/ou de climatisation (4) loge un filtre à particules (29) disposé à l'intérieur du boîtier d'admission d'air (12).

11. Appareil selon l'une quelconque des revendications précédentes, **caractérisé en ce que** la bouche d'entrée d'air de recirculation (14) et la bouche d'entrée d'air extérieur (13) sont équipées d'un volet d'admission d'air respectif (15) manoeuvrable entre une position d'ouverture dans laquelle le volet d'admission d'air (15) autorise une admission d'air à l'intérieur du boîtier d'admission d'air (12) et une position de fermeture dans laquelle le volet d'admission d'air (15) interdit une telle admission.

12. Installation de chauffage, ventilation, et/ou de climatisation (5) d'un véhicule automobile comprenant un appareil de chauffage, ventilation, et/ou de climatisation (4) selon l'une quelconque des revendications précédentes, **caractérisée en ce qu'**elle comprend un moyen de passage de l'air extérieur (13) vers l'habitacle.

13. Installation selon la revendication 12, **caractérisée en ce que** le groupe moto-ventilateur (6) est disposé à l'intérieur du compartiment moteur (1), et **en ce que** le boîtier d'admission d'air (12), équipé de la bouche d'entrée du flux d'air extérieur (13) et de la bouche d'entrée du flux d'air de recirculation (14) est disposé à l'intérieur du compartiment habitacle (2).

14. Installation selon la revendication 13, comprenant un tablier de séparation (3) des compartiments moteur (1) et habitacle (2) du véhicule, **caractérisé en ce que** ledit moyen de passage de l'air extérieur (13) vers l'habitacle (2) est ménagé dans le tablier (3).

15. Installation selon la revendication 14, **caractérisée en ce que** le tablier (3) comporte :
- au moins une première ouverture (18) formant ledit moyen de passage du flux d'air extérieur (16) depuis le compartiment moteur (1) vers le boîtier d'admission d'air (12).

16. Installation selon la revendication 14 ou 15, **caractérisée en ce que** le tablier (3) comporte :
- au moins une deuxième ouverture (20) pour le passage d'un flux d'air (7) depuis le boîtier d'admission d'air (12) vers un canal d'admission d'air (22) d'une volute (9) constitutive du groupe-moto-ventilateur (6).

17. Installation selon l'une quelconque des revendications 14 à 16, **caractérisée en ce que** le tablier (3) comporte :
- au moins une troisième ouverture (23) pour le passage du flux d'air (7) depuis un canal d'évacuation d'air (32), qui est disposé à l'intérieur du compartiment moteur (1), vers un boîtier de distribution d'air (24), qui est disposé à l'intérieur du compartiment habitacle (2).

18. Installation selon la revendication 13, **caractérisé en ce que** ledit moyen de passage de l'air extérieur (13) vers l'habitacle est compris dans l'appareil de chauffage, ventilation, et/ou de climatisation (4)

19. Installation selon la revendication 18, comprenant un tablier de séparation (3) des compartiments moteur (1) et habitacle (2) du véhicule, **caractérisé en ce qu'**un unique passage est réalisé dans le tablier dédié au passage d'un flux d'air extérieur (16) depuis le compartiment moteur (1) vers le boîtier d'admission d'air (12) et au passage d'un flux d'air (7) depuis le boîtier d'admission d'air (12) vers un canal d'admission d'air (22) d'une volute (9) constitutive du groupe moto-ventilateur (6).

20. Installation selon la revendication 19, **caractérisé en ce que** des parois internes du boîtier d'admission (12) séparent le flux d'air extérieur (16) et le flux d'air (7).

## Claims

1. Heating, ventilating and/or air conditioning apparatus (4) of a motor vehicle, comprising engine fans (6) designed to be installed inside an engine compartment (1) of the vehicle, and an air-inlet housing (12) designed to be installed inside a car interior (2) of the vehicle and provided with at least one inlet (13) for a flow of outside air, **characterized in that** the air-inlet housing (12) is provided with at least one inlet (13) for a flow of outside recirculation air (14) and **in that** the said flow of outside air (13) comes from the engine compartment (1).

2. Apparatus according to Claim 1, **characterized in that** the heating, ventilating and/or air conditioning apparatus (4) comprises an air-inlet channel (22) extending between an air inlet (10) of a volute (9) constituting the engine fans (6) and a window (19) for evacuation of an air flow (7) placed in the air-inlet housing (12).

3. Apparatus according to Claim 1 or 2, **characterized in that** the heating, ventilating and/or air conditioning apparatus (4) comprises an air-evacuation channel (32) extending between an air outlet (11) of the volute (9) and an air outlet (33) of the air-evacuation channel (32) placed opposite an inlet window (25) of an air-distribution housing (24) designed to be installed inside the car interior (2).

4. Apparatus according to Claim 3, **characterized in that** the heating, ventilating and/or air conditioning apparatus (4) houses at least one heat treatment means (27, 28) for the air flow (7) circulating across the heating, ventilating, and/or air conditioning apparatus (4).

5. Apparatus according to Claim 4, **characterized in that** the heat treatment means (27, 28) is housed inside the air distribution housing (24).

6. Apparatus according to Claim 4 or 5, **characterized in that** the thermal treatment means (27, 28) is housed inside the air-evacuation channel (32).

7. Apparatus according to any one of Claims 3 to 6, **characterized in that** the air-inlet housing (12) and the air-distribution housing (24) form a first one-piece assembly (30).

8. Apparatus according to any one of Claims 3 to 7, **characterized in that** the volute (9) and the air-evacuation channel (32) form a second one-piece assembly (31).

9. Apparatus according to any one of Claims 6 to 8, **characterized in that** the heating, ventilating and/or air conditioning apparatus (4) houses a particle filter (29) placed inside the air-evacuation channel (32).

10. Apparatus according to any one of Claims 6 to 8, **characterized in that** the heating, ventilating and/or air conditioning apparatus (4) houses a particle filter (29) placed inside the air-inlet housing (12).

11. Apparatus according to any one of the preceding claims, **characterized in that** the recirculation-air inlet (14) and the outside-air inlet (13) are fitted with a respective air-inlet flap (15) that can be operated between an open position in which the air-inlet flap (15) allows an inlet of air into the air-inlet housing (12) and a closed position in which the air-inlet flap (15) prevents such an inlet.

12. Heating, ventilating and/or air conditioning installation (5) of a motor vehicle comprising a heating, ventilating and/or air conditioning apparatus (4) according to any one of the preceding claims, **characterized in that** it comprises a means for passing the outside air (13) towards the car interior.

13. Installation according to Claim 12, **characterized in that** the engine fans (6) are placed inside the engine compartment (1), and **in that** the air-inlet housing (12), fitted with the inlet (13) for the flow of outside air and the inlet (14) for the flow of recirculation air, is placed inside the car interior compartment (2).

14. Installation according to Claim 13, comprising a bulkhead (3) for separating the engine compartment (1) and car interior (2) of the vehicle, **characterized in that** the said means (13) for passing the outside air to the car interior (2) is arranged in the bulkhead (3).

15. Installation according to Claim 14, **characterized in that** the bulkhead (3) comprises:
- at least one first opening (18) forming the said means (16) for passing the flow of outside air from the engine compartment (1) to the air-inlet housing (12).

16. Installation according to Claim 14 or 15, **characterized in that** the bulkhead (3) comprises:
- at least one second opening (20) for passing a flow of air (7) from the air-inlet housing (12) to an air-inlet channel (22) of a volute (9) forming the engine fans (6).

17. Installation according to any one of Claims 14 to 16, **characterized in that** the bulkhead (3) comprises:
- at least one third opening (23) for passing the flow of air (7) from an air-evacuation channel (32), which is placed inside the engine compartment (1), to an air-distribution housing (24), which is placed inside the car interior compartment (2).

18. Installation according to Claim 13, **characterized in that** the said means (13) for passing the outside air to the car interior is included in the heating, ventilating and/or air conditioning apparatus (4).

19. Installation according to Claim 18, comprising a bulkhead (3) for separating the engine compartment (1) and car interior (2) of the vehicle, **characterized in that** a single passageway is produced in the bulkhead dedicated to passing a flow of outside air (16) from the engine compartment (1) to the air-inlet housing (12) and to the passing of a flow of air (7) from the air-inlet housing (12) to an air-inlet channel (22) of a volute (9) forming the engine fans (6).

20. Installation according to Claim 19, **characterized in that** internal walls of the inlet housing (12) separate the flow of outside air (16) and the flow of air (7).

## Patentansprüche

1. Heiz-, Lüftungs- und/oder Klimagerät (4) eines Kraftfahrzeugs, das einen Lüftermotor (6), der dazu bestimmt ist, im Inneren eines Motorraums (1) des Fahrzeugs eingebaut zu werden, und ein Luftansauggehäuse (12) enthält, das dazu bestimmt ist, in einem Innenraumabteil (2) des Fahrzeugs eingebaut zu werden und mit mindestens einer Einlassmündung eines Außenluftstroms (13) versehen ist,
**dadurch gekennzeichnet, dass** das Luftansauggehäuse (12) mit mindestens einer Einlassmündung eines Umwälzluftstroms (14) versehen ist, und dass der Außenluftstrom (13) vom Motorraum (1) kommt.

2. Gerät nach Anspruch 1, **dadurch gekennzeichnet, dass** das Heiz-, Lüftungs- und/oder Klimagerät (4) einen Luftansaugkanal (22) enthält, der sich zwischen einem Lufteinlass (10) eines Spiralgehäuses (9), das ein Bestandteil des Lüftermotors (6) ist, und einem Abfuhrfensters (19) eines Luftstroms (7) erstreckt, das in dem Luftansauggehäuse (12) angeordnet ist.

3. Gerät nach Anspruch 1 oder 2, **dadurch gekennzeichnet, dass** das Heiz-, Lüftungs- und/oder Klimagerät (4) einen Luftabfuhrkanal (32) enthält, der sich zwischen einem Luftauslass (11) des Spiralgehäuses (9) und einem Luftauslass (33) des Luftabfuhrkanals (32) erstreckt, der gegenüber einem Zufuhrfenster (25) eines Luftverteilergehäuses (24) angeordnet ist, das dazu bestimmt ist, im Innenraumabteil (2) eingebaut zu werden.

4. Gerät nach Anspruch 3, **dadurch gekennzeichnet, dass** im Heiz-, Lüftungs- und/oder Klimagerät (4) mindestens eine Wärmebehandlungseinrichtung (27, 28) des Luftstroms (7) untergebracht ist, der durch das Heiz-, Lüftungs- und/oder Klimagerät (4) zirkuliert.

5. Gerät nach Anspruch 4, **dadurch gekennzeichnet, dass** die Wärmebehandlungseinrichtung (27, 28) im Inneren des Luftverteilungsgehäuses (24) untergebracht ist.

6. Gerät nach Anspruch 4 oder 5, **dadurch gekennzeichnet, dass** die Wärmebehandlungseinrichtung (27, 28) im Inneren des Luftabfuhrkanals (32) untergebracht ist.

7. Gerät nach einem der Ansprüche 3 bis 6, **dadurch gekennzeichnet, dass** das Luftansauggehäuse (12) und das Luftverteilungsgehäuse (24) eine erste einstückige Einheit (30) bilden.

8. Gerät nach einem der Ansprüche 3 bis 7, **dadurch gekennzeichnet, dass** das Spiralgehäuse (9) und der Luftabfuhrkanal (32) eine zweite einstückige Einheit (31) bilden.

9. Gerät nach einem der Ansprüche 6 bis 8, **dadurch gekennzeichnet, dass** im Heiz-, Lüftungs- und/oder Klimagerät (4) ein Partikelfilter (29) untergebracht ist, der im Inneren des Luftabfuhrkanals (32) angeordnet ist.

10. Gerät nach einem der Ansprüche 6 bis 8, **dadurch gekennzeichnet, dass** im Heiz-, Lüftungs- und/oder Klimagerät (4) ein Partikelfilter (29) untergebracht ist, der im Inneren des Luftansauggehäuses (12) angeordnet ist.

11. Gerät nach einem der vorhergehenden Ansprüche, **dadurch gekennzeichnet, dass** die Umwälzluft-Einlassmündung (14) und die Außenluft-Einlassmündung (13) mit einer jeweiligen Luftansaugklappe (15) ausgestattet sind, die zwischen einer Öffnungsstellung, in der die Luftansaugklappe (15) eine Luftansaugung ins Innere des Luftansauggehäuses (12) erlaubt, und einer Schließstellung betätigbar sind, in der die Luftansaugklappe (15) eine solche Ansaugung verhindert.

12. Heiz-, Lüftungs- und/oder Klimaanlage (5) eines Kraftfahrzeugs, die ein Heiz-, Lüftungs- und/oder Klimagerät (4) nach einem vorhergehenden Ansprüche enthält, **dadurch gekennzeichnet, dass** sie eine Einrichtung zum Durchlass der Außenluft (13) in den Innenraum enthält.

13. Anlage nach Anspruch 12, **dadurch gekennzeichnet, dass** der Lüftermotor (6) im Inneren des Motorraums (1) angeordnet ist, und dass das Luftansauggehäuse (12), das mit der Einlassmündung des Außenluftstroms (13) und der Einlassmündung des Umwälzluftstroms (14) ausgestattet ist, im Inneren des Innenraumabteils (2) angeordnet ist.

14. Anlage nach Anspruch 13, die eine Trennspritzwand (3) des Motorraums (1) und des Innenraumabteils (2) des Fahrzeugs enthält, **dadurch gekennzeichnet, dass** die Einrichtung zum Durchlass der Außenluft (13) zum Innenraum (2) in der Spritzwand (3) ausgebildet ist.

15. Anlage nach Anspruch 14, **dadurch gekennzeichnet, dass** die Spritzwand (3) aufweist:
- mindestens eine erste Öffnung (18), die die Durchlasseinrichtung des Außenluftstroms (16) vom Motorraum (1) zum Luftansauggehäuse (12) bildet.

16. Anlage nach Anspruch 14 oder 15, **dadurch gekennzeichnet, dass** die Spritzwand (3) aufweist:
- mindestens eine zweite Öffnung (20) für den Durchlass eines Luftstroms (7) vom Luftansauggehäuse (12) zu einem Luftansaugkanal (22) eines Spiralgehäuses (9), das ein Bestandteil des Lüftermotors (6) ist.

17. Anlage nach einem der Ansprüche 14 bis 16, **dadurch gekennzeichnet, dass** die Spritzwand (3) aufweist:
- mindestens eine dritte Öffnung (23) für den Durchlass des Luftstroms (7) von einem Luftabfuhrkanal (32), der im Inneren des Motorraums (1) angeordnet ist, zu einem Luftverteilungsgehäuse (24), das im Inneren des Innenraumabteils (2) angeordnet ist.

18. Anlage nach Anspruch 13, **dadurch gekennzeichnet, dass** die Durchlasseinrichtung der Außenluft (13) zum Innenraum im Heiz-, Lüftungs- und/oder Klimagerät (4) enthalten ist.

19. Anlage nach Anspruch 18, die eine Trennspritzwand (3) des Motorraums (1) und des Innenraumabteils (2) des Fahrzeugs enthält, **dadurch gekennzeichnet, dass** ein einziger Durchlass in der Spritzwand hergestellt ist, der dem Durchlass eines Außenluftstroms (16) vom Motorraum (1) zum Luftansauggehäuse (12) und dem Durchlass eines Luftstroms (7) vom Luftansauggehäuse (12) zu einem Luftansaugkanal (22) eines Spiralgehäuses gewidmet ist, das ein Bestandteil des Lüftermotors (6) ist.

20. Anlage nach Anspruch 19, **dadurch gekennzeichnet, dass** Innenwände des Ansauggehäuses (12) den Außenluftstrom (16) und den Luftstrom (7) trennen.
